# EUROPEAN PATENT SPECIFICATION

(11) **EP 1 563 027 B1**
(45) Date of publication and mention of the grant of the patent: **09.01.2019**
(21) Application number: 03783145.0
(22) Date of filing: 04.11.2003
(51) Int. Cl.: C09J 1/00, C09J 9/02, C08J 7/04, C08K 3/00, C08K 3/10, F41H 5/04, C22F 1/00

(54) **POLYMER COMPOSITE STRUCTURE REINFORCED WITH SHAPE MEMORY ALLOY AND METHOD OF MANUFACTURING SAME**
MIT EINER FORMGEDÄCHTNISLEGIERUNG VERSTÄRKTES POLYMERKOMPOSIT UND VERFAHREN ZU DESSEN HERSTELLUNG
STRUCTURE POLYMERE COMPOSITE RENFORCEE A L'AIDE D'UN ALLIAGE A MEMOIRE DE FORME ET SON PROCEDE DE PRODUCTION

(30) Priority: 04.11.2002 US 287561
(43) Date of publication of application: 17.08.2005
(73) Proprietor: The Boeing Company, Chicago, IL 60606-1596 (US)
(72) Inventor: SCHNEIDER, Terry, L., Puyallup, WA 98372-5242 (US)
(74) Representative: Land, Addick Adrianus Gosling
(86) International application number: PCT/US2003/035159
(87) International publication number: WO 2004/041950

(56) References cited:
- US-A- 5 614 305
- DATABASE WPI Section Ch, Week 199411 Derwent Publications Ltd., London, GB; Class A85, AN 1994-086773 XP002277652 & JP 06 036613 A (ROHM CO LTD) 10 February 1994 (1994-02-10)
- DATABASE WPI Section Ch, Week 199237 Derwent Publications Ltd., London, GB; Class A18, AN 1992-302639 XP002277653 & JP 04 207100 A (SHOWA ELECTRIC WIRE & CABLE CO) 29 July 1992 (1992-07-29)
- Dieter Stoeckel: "THE SHAPE MEMORY EFFECT- Phenomenon, Alloys and Applications. Proceedings: Shape memory Alloys for Power Systems EPRI, 1995", , 1 January 2001 (2001-01-01), pages 1-13, XP055394169, Retrieved from the Internet: URL:https://www.nitinol.com/wp-content/upl oads/2012/01/038.pdf [retrieved on 2017-07-26]

## Description

The present invention relates to polymer composite structures, and more particularly to a polymer composite structure having a resin matrix interlayer infused with shape memory alloy particles to significantly enhance the damage resistance, damage tolerance (e.g. compression-after-impact strength) and elevated temperature performance of the structure.

Polymer composite materials selected and qualified for various applications, such as with primary structure applications in the manufacture of aircraft, are evaluated for two key mechanical properties: compression-after-impact (CAI) strength and hot-wet compression strength, and more specifically open-hole-compression (OHC) strength. However, the means for increasing a composite material's CAI strength and hot-wet OHC strength have typically been counterproductive to each other. More specifically, traditional particulate interlayer toughening methods using elastomeric or thermoplastic-based polymer particles have been effective for increasing a composite's CAI strength, but not generally effective for simultaneously increasing hot-wet compression strength (e.g., hot-wet OHC) properties and, more typically, result in a tradeoff relationship with one another.

Conventional methods utilized to increase the hot-wet compression strength properties of a polymer composite have usually involved increasing the resin matrix crosslink density to increase the elastic modulus of the resin or by reducing the water absorption characteristics of the matrix by proper formulation of the resin's specific chemistry. Efforts associated with increasing the matrix crosslink density to increase hot-wet compression strength typically result in a composite having reduced CAI properties.

Accordingly, it would be highly desirable to provide a polymer composite material having an interlayer structure which significantly enhances the toughness of the interlayer material, and thereby increase its CAI strength, without the negative feature of degrading the hot-wet compression strength of the interlayer.

In the interest of toughening the composite matrix interlayer sufficiently to improve its CAI strength, it will be appreciated that shape memory alloys (SMAs) are known to have unique, "super elastic" properties. One common, commercially available SMA is NITINOL®, a titanium-nickel alloy. This particular alloy, as well as other SMA materials, are able to undergo an atomic phase change from a higher modulus, austenitic phase when at a zero stress state, to a "softer," lower modulus, martensitic phase upon the application of a load or stress. Once the load or stress is eliminated, the alloy is able to revert to its original, stress-free, higher modulus austenitic state. In the process of absorbing the energy from the induced stress, the metal temporarily deforms similar to an elastomer. This stress-induced phase change for NITINOL® alloy is reversible and repeatable without permanent deformation of the metal up to approximately 8-10% strain levels. NITINOL® alloy is further able to absorb (i.e., store) five times the energy of steel and roughly three times the energy of titanium.

A comparison of the NITINOL® (NITI) alloy's superior ability to absorb energy relative to other materials is shown below:

| **Material** | **Maximum Springback Strain*** | **Stored Energy** |
|---|---|---|
| Steel | 0.8 % | 8 Joules/cc |
| Titanium | 1.7 % | 14 Joules/cc |
| NITINOL® | 10.0 % | 42 Joules/cc |

| | | |
|---|---|---|
| *Maximum reversible springback without permanent deformation of strain-offset. | | |

In view of the foregoing, it would be highly desirable to provide a polymer composite structure having a matrix interlayer which provides the superelastic properties of a SMA, but which does not significantly add to the weight of the overall structure, and also which does not negatively effect the hot-wet compression strength of the matrix interlayer.

JP 06036613 A discloses a cementing material for electronic part which material may comprise shape memory alloys, which provide vibration resistance.

JP 04207100 A discloses an electroconductive resin comprising shape memory alloy particles.

The present invention is directed to a moldable resin according to claim 1 that can be used to form a polymer composite structure having an interlayer which is reinforced with shape memory alloy (SMA) particles. The use of SMA particles in the interlayer significantly enhances the damage resistance and damage tolerance (e.g. compression-after-impact (CAI) strength) of the interlayer without negatively effecting its hot-wet compression strength.

In one preferred form the moldable resin comprises
titanium-nickel alloy particles, and more preferably particles formed from NITINOL® alloy. The titanium-nickel alloy particles have superelastic, reversible strain properties similar to elastomeric or polymeric thermoplastic particles more traditionally utilized in the interlayer of a polymer composite structure, but do not negatively affect the hot-wet compression strength of the interlayer. The result is a polymer composite material having an interlayer which is able to even more effectively absorb impact stresses, thereby toughening the composite material, without negatively effecting its hot-wet compression strength.

In an example the NITINOL® alloy particles are
dispersed generally uniformly throughout a resin matrix interlayer of the polymer composite structure. In one preferred form the NITINOL® alloy particles comprise particles having a cross-sectional diameter up to, or possibly exceeding, about 50 microns, and as small as nanometers in cross sectional diameter. The particles may be formed in cylindrical, oval, or spherical shapes, or virtually any other shape.

In an example all of the distinct resin interlayers
include SMA particles in an austenitic phase. In an alternative example a plurality of distinct matrix interlayers are provided in a polymer composite structure. At least one of the interlayers includes SMA particles provided in an austenitic phase and at least one interlayer includes SMA particles provided in a martensitic phase at the same temperature, depending on the intrinsic transformation temperature of the SMA particles.

In still another alternative example, an advanced hybrid fiber-metal laminate composite structure is provided wherein one or more interlayers having SMA particles are provided for bonding one or more metal layers and fiber layers to form a unitary composite structure.

In still another example form, the distinct resin-particle
interlayers include SMA particles in low concentration relative to a "resin-rich" interlayer matrix. In an alternative example, the distinct resin-particle interlayers include SMA
particles in high concentration as a SMA "particle-rich" interlayer, relative to the resin interlayer matrix, approaching the morphology of a continuous metal interlayer similar to fiber-metal laminates. It will be understood that a range of SMA particle concentrations within the resin matrix interlayer from low to high, proportional to the volume of the resin matrix, is possible depending on the desired properties of the resultant composite laminate.

Further areas of applicability of the present invention will become apparent from the detailed description provided hereinafter. It should be understood that the detailed description and specific examples are intended for purposes of illustration only and are not intended to limited the scope of the invention.

### BRIEF DESCRIPTION OF THE DRAWINGS

The present invention will become more fully understood from the detailed description and the accompanying drawings, wherein:
Figure 1 is a cross-sectional side view of a portion of a polymer composite structure;
Figure 2 is a perspective view of one cylindrical (i.e., "filament" shaped) SMA particle used in the resin matrix interlayer of the composite structure shown in Figure 1 ;
Figure 3 is a perspective view of an oval shaped SMA particle which may be used in the resin matrix interlayer of the structure shown in Figure 1 ;
Figure 4 is a plan view of a spherical SMA particle which may be used in the resin matrix interlayer of the structure of Figure 1 ;
Figure 5 is a side cross-sectional view of an alternative example
   of the polymer composite structure of the present invention illustrating the use of distinct interlayers having austenitic and martensitic phase SMA particles;
Figure 6 is a side cross-sectional view of an advanced, hybrid, fiber-metal laminate composite structure in accordance with an alternative example;
Figure 7 is a side cross-sectional view of an injection molded part made from a moldable resin reinforced with SMA particles;
Figure 8 is a side cross-sectional view of a compression molded part made from a moldable resin reinforced with SMA particles;
Figure 9 is a side cross-sectional view of a molded plastic part incorporating a carrier layer of material reinforced with SMA particles;
Figure 10 is a view of the part of Figure 9 but with the carrier layer formed at a core of the molded part;
Figure 11 is a side cross-sectional view of an adhesive film reinforced with SMA particles being used to bond to components together;
Figure 12 is a side cross-sectional view of an adhesive paste reinforced with SMA particles being used to bond two components; and
Figure 13 is a side cross-sectional view of a paint or protective coating reinforced with SMA particles being used to cover an outer surface of a part.

### DETAILED DESCRIPTION OF THE PREFERRED EMBODIMENTS

The following description of examples and the preferred embodiment(s) is merely exemplary in nature and is in no way intended to limit the invention, its application, or uses.

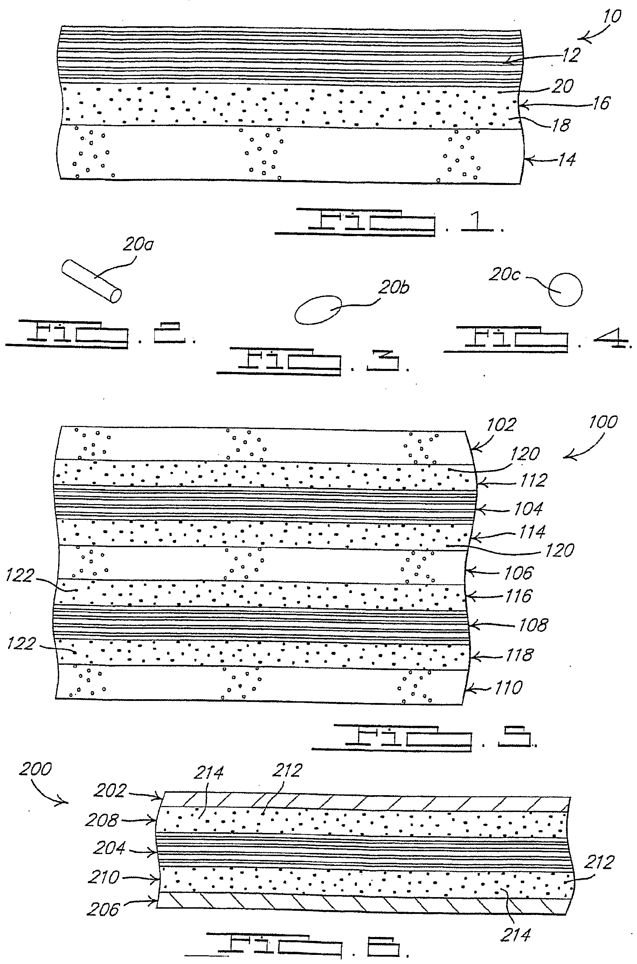

Referring to Figure 1 , there is shown a polymer composite structure 10. The composite structure 10.
includes a first fiber layer (i.e., ply) 12, a second fiber layer (ply) 14 and a resin matrix interlayer or compound 16 for bonding the layers 12 and 14 together to form a single, unitary composite structure or material. Each of layers 12 and 14 are typically comprised of a plurality of fiber elements or filaments. Layer 12 is shown with 0° fibers and layer 14 is shown with 90° fibers (i.e., fibers orientated at 90° from those of layer 12). It will be appreciated, however, that the particular arrangement of the fibers of each layer 12 and 14 could be varied to suit the needs of a particular application, and that the arrangement of the fibers of layers 12 and 14 at a 90°- angle relative to one another is only for exemplary purposes.

The resin matrix layer 16 is comprised of a resin material 18 within which is dispersed a plurality of shape memory alloy (SMA) particles 20. The resin material 18 may comprise various thermosetting or thermoplastic polymer matrices or any other suitable resin for forming a polymer composite structure. The SMA particles 20 are preferably dispersed generally uniformly through the resin matrix interlayer 16 and may range from very low to very high in particle concentration relative to the resin matrix interlayer. The SMA particles 20 may comprise any one of a plurality of materials generally recognized to fall within the class of "shape memory alloys," but in one preferred form the particles 20 comprise nickel-titanium alloy particles known under the trade name "NITINOL®." The SMA particles 20 have reversible-superelastic strain properties without permanent
deformation in the austenitic state which effectively serve to toughen the interlayer 16 and significantly improve damage resistance and damage tolerance (e.g. compression-after-impact (CAI) strength) of the interlayer 16 without adversely effecting the hot-wet compression strength of the interlayer. This is important because increasing the CAI strength of the interlayer serves to toughen the interlayer against microcracking and delamination but without the negative impact of lowering the hot-wet compression strength of the overall polymer composite structure 10. This is due in part to the fact that the use of the SMA particles 20 eliminates the need to use elastomeric particles such as rubber or thermoplastic particles such as nylon, which are more typically used to strengthen the composite laminate interlayer, but which are known to absorb water in the resin 18, and therefore result in a reduction in the hot-wet compression strength of the interlayer 16. SMA particles, and particularly NITINOL® alloy, do not absorb water, and therefore do not negatively impact the hot-wet compression strength of the interlayer 16.

It will also be appreciated that the use of SMA metal particles as a resin additive provides the added benefit of serving to disperse the energy of an electric charge, such as from a lightening strike, more evenly throughout the composite structure 10. This is particularly important in aerospace applications where the composite structure 10 is to be used to form a portion of an aircraft that could experience a lightening strike during operation. The SMA particles 20 effectively serve to spread out or dissipate the electric charge over a greater area of the composite structure 10, thereby reducing the chance of damage to a localized portion of the structure.

Still another significant advantage of the SMA particles 20 is that they do not tangibly increase the overall weight of the composite structure 10 due to the resultant gains in overall strength of the composite under hot/wet conditions which typically limit the performance envelope for polymer composite structures. Again, this is particularly important in aerospace applications where lightweight, yet structurally strong components are highly important. Moreover, the use of SMA particles 20 in the matrix interlayer does not require significant modification to existing composite part fabrication processes where composite structures are formed using prepreg materials and are easily incorporated into advanced composite part fabrication processes not involving preimpregnated material forms (e.g. resin transfer molding (RTM), vacuum assisted resin transfer molded (VARJM), resin infusion, etc).

Referring to Figures 2-4, various representative forms of the SMA particles 20 are illustrated. Figure 2 illustrates a cylindrically shaped SMA particle 20a, Figure 3 illustrates an oval shaped particle 20b, and Figure 4 illustrates a spherically shaped SMA particle 20c. It will be appreciated that other variations of these shapes could just as easily be used, and mixtures of differently shaped SMA particles 20 could also be employed. The cross-sectional diameter of the SMA particles 20 may vary considerably, but in one preferred form can be up to, or possibly exceed, about 50 microns (50 x 10-6 meter), and can be as small as 0.005 microns (5 x 10-9 meter). If the SMA particles 20 are in cylindrical or whisker-like form, the length can vary significantly and possibly up to millimeters in length or possibly even greater.

The use of NITINOL® alloy as the SMA material provides significant resistance to impact damage of the composite structure 10. This is because NITINOL® alloy is capable of absorbing a significant degree of impact and deformation due to its high elongation properties. NITINOL® alloy provides reversible, strain properties of up to 8-10% strain without permanent deformation (or strain offset) when in its austenitic phase. This provides significant load-velocity impact resistance. NITINOL® alloy also provides a non-reversible strain property enabling up to 20-25% elongation-to-failure, for high velocity impact resistance. NITINOL® alloy also has significant vibration dampening properties while in the martensitic state that help to improve the fatigue life of the composite structure 10, which is an especially desirable characteristic for aircraft and spacecraft structures.

Referring now to Figure 5, there is shown a polymer composite structure 100 which incorporates fiber layers or plies 102, 104, 106, 108 and 110, with fiber layer 102 representing an outmost layer and layer 110 representing an innermost layer. These layers 102-110 are separated by resin matrix interlayers 1 12, 114, 116 and 118. While fiber layers 102, 104, 106, 108 and 110 are shown as having fibers arranged at 90° angles relative to each layer, it will be appreciated that various other arrangements could be employed. In this example, resin matrix interlayers 112 and 114 are comprised of SMA particles 120, such as NITINOL® alloy particles, in the austenitic phase. However, resin matrix interlayers 116 and 118 are comprised of SMA particles 122 in the martensitic phase. NITINOL® alloy in the austenitic phase has superelastic properties (i.e., reversible, strain properties) and is able to withstand impacts without permanent deformation (e.g., up to 10% strain levels). The NITINOL® alloy is also able to absorb significant vibrations and shock and therefore prevents permanent deformation of the layers 112 and 114. NITINOL® alloy in the martensitic phase, however, has extremely high specific dampening capacity (SDC) and is able to dampen impact energies (i.e., shock) to protect against delamination of the independent plies of the composite structure 100. Effectively, the NITINOL® alloy in the martensitic phase acts as a vibration/shock energy absorber (i.e., sink) to help significantly dissipate impact energies experienced by the composite structure 100. Depending on the composite structure's application, the transformation temperature of the NITINOL® particles utilized can be selected so that the SMA is in the desired atomic state (austenitic or martensitic) to yield the desired properties and performance of the material.

Referring now to Figure 6, a composite structure 200 in accordance with yet another example is shown. The composite structure 200 forms an advanced, hybrid fiber-metal laminate composite structure. The structure 200 includes a metal ply 202, a fiber ply 204 and another metal ply 206. The fiber ply 204 is sandwiched between the metal plies 202 via a pair of resin matrix interlayers 208 and 210. Each of resin matrix interlayers 208 and 210 includes a plurality of SMA particles 212 formed within a suitable resin 214. Again, the SMA particles may comprise NITINOL® alloy particles in either the austenitic or martensitic states depending on the application's intended use.

In each of the above-described examples, it will be appreciated that
the amount of SMA particles by volume in a given resin matrix interlayer can vary significantly to suit the needs of a specific application. Typically, however, the resin matrix interlayer will comprise about 3% - 30% SMA particles by volume, but these particles may be utilized in significantly higher concentrations as a discontinuous, particle-rich layer approaching the morphology similar to a discrete, continuous metal ply as in fiber-metal laminates. Alternatively, a lesser concentration of the SMA particles 20 could just as readily be used to suit a specific application. While NITINOL® alloy is a particularly desirable SMA, it will be appreciated that other SMAs such as Ni-Ti-Cu, Cu-AI-Ni-Mn and a recently developed nickel-free, pseudoelastic beta titanium alloy may also be used with the present invention.

The use of NITINOL® alloy as the SMA material also provides a number of additional advantages. NITINOL® alloy has excellent corrosion resistance and high wear (i.e., erosion) resistance, relative to steel. The wear resistance of NITINOL® alloy is on the order of 10 times greater than that of steel. When NITINOL® is added to a thermosetting polymer composite, it can improve the G1 c/G11c properties (i.e., mechanical properties reflecting fracture resistance) of the composite. The NITINOL® alloy, as mentioned in the foregoing, also provides significantly improved electrical conductivity for the composite structure to thus improve its durability relative to repeated lightening strikes. The overall durability of the outer surface of the composite is also improved (i.e., regarding wear and erosion resistance).

Still further advantages of the use of NITINOL® alloy for the SMA particles is that the use of NITINOL® alloy has little impact on current manufacturing processes. More specifically, NITINOL® alloy does not require significant modification to ATLM (Automated Tape Laying Machining), hot-drape forming, advanced fiber placement (AFP), and hand lay-up operations. The use of NITINOL® alloy is also readily applicable to Resin Transfer Molding (RTM), Vacuum Assisted Resin Transfer Molding (VARTM) and Seamann Composite's Resin Injection Molding Process (SCRIMP), where the
NITINOL® alloy particles are added to the surface of the preform's fibers or partitioned between layers of the preform's plies prior to resin impregnation processes. Still another unique benefit to the use of a SMA particle-toughened composite structure would be its ability to be utilized in a form equivalent to prepreg materials currently used (i.e., unidirectional tape and fabric prepregs) without impacting current machine processes. The SMA particle-toughened composite could possibly also act as a "drop-in" replacement for current materials used in such processes as Automated Tape Laying Machining (ATLM), advanced fiber placement (AFP), hot-drape forming and conventional hand layup. As will be appreciated, the use of SMA particles within the interlayers of a composite structure has significant specific advantages to aircraft structures. The vibration dampening characteristics of the NITINOL® alloy particles will significantly enhance the fatigue-life of aircraft structures. In space applications, where typically stiff composite structures are subjected to extreme acoustic and structural vibrations during launch, the NITINOL® alloy particles will provide added protection against delamination and fracturing of the interlayers.

It will also be appreciated that the use of NITINOL® alloy particles provides significant, additional manufacturing advantages. Presently, it is not practical (or possible) to use elongated NITINOL® alloy fibers (i.e., "wires"), or any SMA wire, for the fabrication of actual contoured composite parts to toughen such parts. By the very nature of the SMA wire, the wire will not conform and stay conformed to the shape of a non-planar (i.e., contoured) part mold during part fabrication due to its superelastic properties. This is because the SMA wire straightens immediately after being bent, once pressure is removed.

Secondly, there is currently no known commercial source of superelastic NITINOL® alloy wire supplied in a tape form, similar to unidirectional carbon fiber tape prepreg. This is likely due to the difficulty of providing such a product since the material would unspool like a loose spring due to the SMA properties of the wires. Moreover, the SMA filaments would not likely stay evenly collimated in such a material form. It will be appreciated that carbon fiber prepreg is manufactured with carbon filaments that are highly collimated unidirectionally in a tape form and held to tight dimensional tolerances in thickness across the width and length of the material. Prior to cure, carbon fibers impregnated with resin are limp and drapable allowing the tape to conform to part molds. These characteristics are virtually impossible to obtain with SMA wire due to its stiffness and spring-like characteristics.

The utilization of SMA particles as a resin matrix additive provides the benefit of toughening the composite laminate, as well as provides additional performance benefits to the structure as previously cited. Most significantly, the SMA as a particle additive enables the practical use of shape memory alloys in composite materials and further enables the composite material to serve as a "drop-in" material, as mentioned herein, for current and advanced production processes in the manufacture of composite parts of various design complexity.

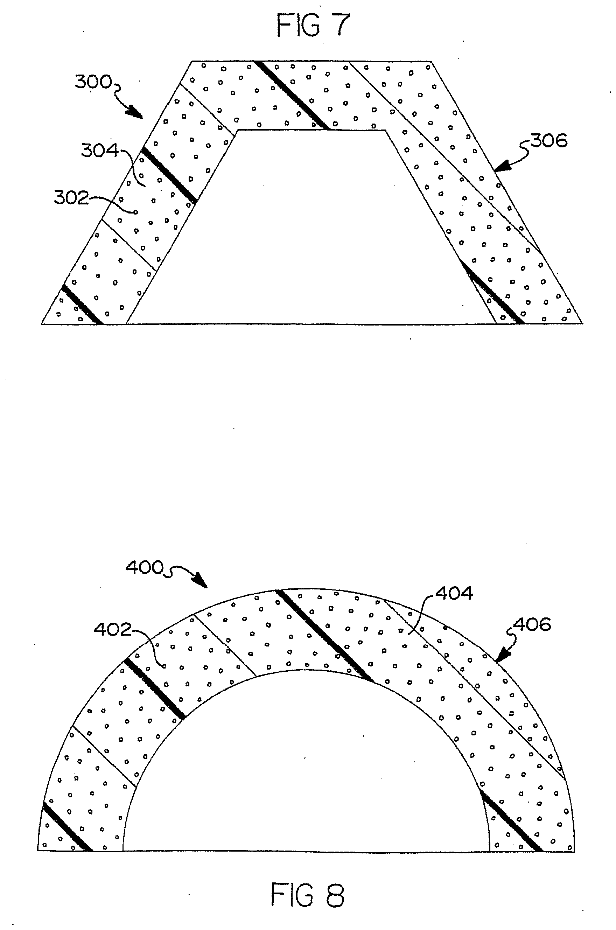

Referring to Figure 7, there is shown an injection molded part 300 made in accordance with an alternative example. In this example, SMA particles 302 are added to a thermosetting resin or thermoplastic resin 304 to form the raw material 306 used for the injection molded part 300. Similarly, in Figure 8, a compression molded part 400 made from a thermosetting or thermoplastic resin 404 having SMA particles 402 intermixed therein to form a raw material 406 is illustrated.

In molding applications, it will be appreciated that the physical and mechanical properties of the base resin utilized in the process can be enhanced and tailored for specific part applications by the addition of various inorganic mineral and metal-complex additives in the resin prior to performing the actual molding operation. The addition of SMA particles 302 or 402, such as NITINOL® alloy particles, to the base resin (304 or 404) improves the mechanical properties of the base material, as well as significantly improves key properties such as impact or ballistic resistance, electrical and thermal conductivity, vibration dampening and flame retardancy of the molded part 300 or 400. In addition to injection and compression molding processes, other process with which the SMA reinforced modable resin could be employed are rotational molding, reactive injection molding, extrusion molding; gas assisted injection molding, blow molding, resin transfer molding (RTM), vacuum assisted resin transfer molding (VARTM) and thermo forming. It will be appreciated that this listing is exemplary only, and that other processes could readily make use of the SMA reinforced moldable resin described herein.

It will also be appreciated that SMA particles can be utilized in the base resin as the sole reinforcing additive or in combination with traditional reinforcements which can include carbon, glass and organic fibers, filaments, whiskers as well as other inorganic or metallic particles depending on the desired properties of the final molded part. In the molded parts 300 and 400, the SMA particles 302,402 are preferably randomly and uniformly distributed in the base resin 304,404, and hence in the final molded part 300,400.

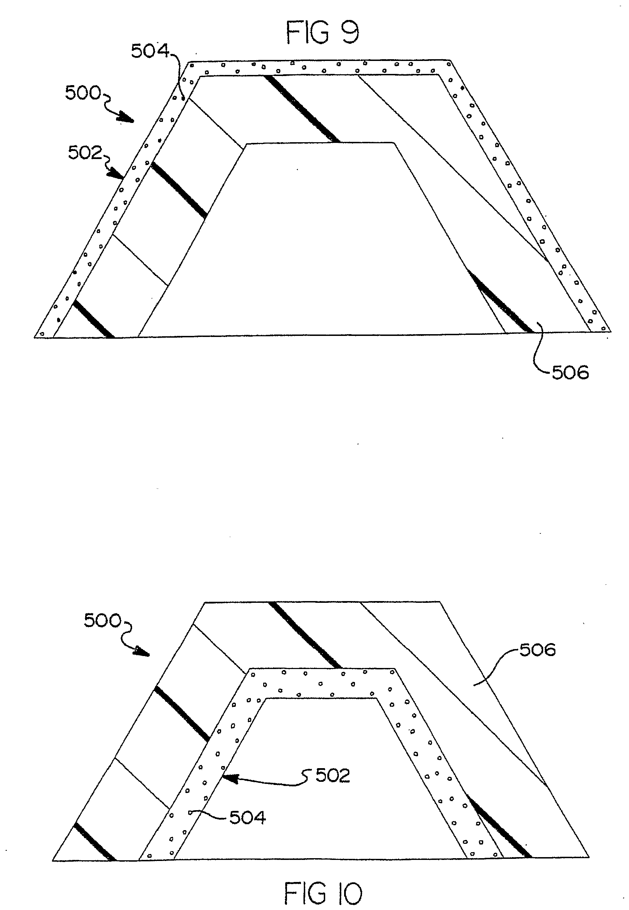

If certain properties, attained only by the presence of the SMA particles 302,402, are desired at select regions of the molded part 300,400, such as on or near the surface, it is conceivable to direct the placement of the SMA particles, via an additional component, to the desired region. This is illustrated in the molded part 500 shown in Figure 9. The molded part 500 includes a carrier material 502 having SMA particles 504 dispersed uniformly throughout. The carrier material 502 may comprise a lightweight woven or non-woven mat or film having a desired thickness. The carrier material 502 is placed in one or more parts of the mold used to make the part 500 prior to injecting the base resin for the part 500 such that the carrier material 502 will be present at a desired location on the part 500 when the part is completed. While Figure 9 illustrates the carrier material 502 to be selectively located on the outer surface of the molded part 500, it will be appreciated that the carrier material could be placed so as to be molded at various places, for example at the core, as shown in Figure 10, or at an intermediate location within the part 500, or in multiple locations in the part. Furthermore, the base resin 506 of the part 500 could also incorporate SMA particles, if desired. In this instance, the base resin 506 and the carrier material 502 could incorporate similar or different concentrations (or types) of SMA particles 504 to provide the part with unique properties to suit a specific application.

SMA particles, such as NITINOL® alloy particles, could be utilized in either their austenitic or martensitic phases condition, or alternatively a combination of both austenitic and martensitic phase NITINOL® alloy particles could be utilized in the base resin (or carrier material) of a molded part. The actual proportion of austenitic phase to martensitic phase NITINOL® alloy particles would depend on the desired properties and performance of the final molded part. SMA particle content in the resin matrix could range from less than 1% to 50% or more by volume relative to the base matrix resin depending on the desired properties of the molded part, and as long as the additive does not negatively affect part producibility during the injection or compression molding process. The SMA particle additives may or may not be subjected to a surface treatment prior to molding to enhance bonding of the SMA metallic particles to the resin matrix.

The size of the SMA particles incorporated in the resin matrix may also range from nanometers in scale to millimeters, or even greater, depending on the part application. SMA particle shape could include various morphologies such as generally spherical, oval, platelet-like, a multifaceted granule, and cylindrical including in the form of whiskers or short filaments.

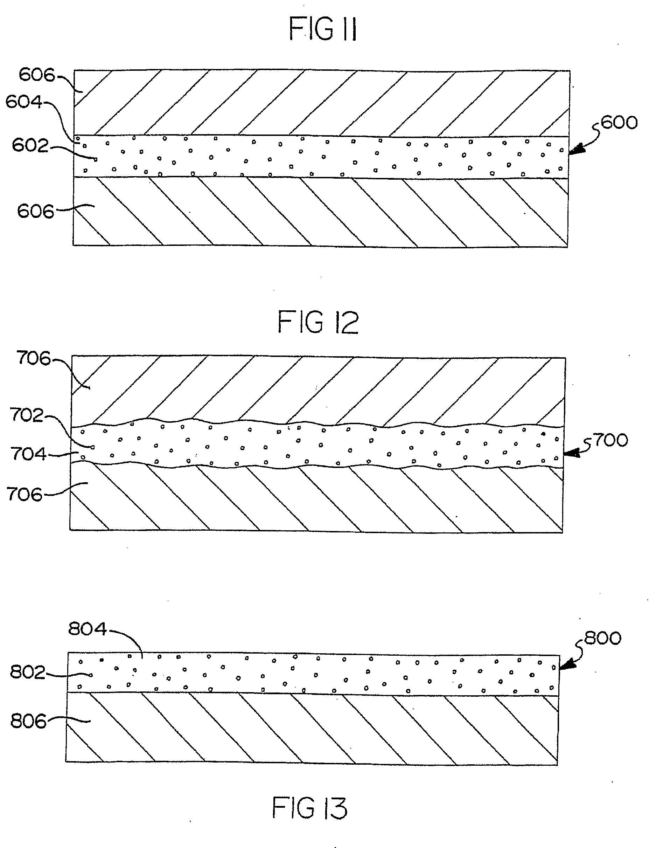

Referring to Figure 11, yet another alternative preferred implementation of the present invention is illustrated in which SMA particles 602 are incorporated in an adhesive base resin matrix 604 to form an adhesive matrix or film 600 that is used to join two components 606. Figure 12 illustrates an adhesive paste 700 having an adhesive base matrix or material 704 and SMA particles 702 interspersed therein, that is used to secure two components 706 together.

It will be appreciated that film and paste adhesives are being used increasingly for the fabrication and joining of parts in the aircraft and aerospace industries, as well as in other industries where structurally strong, lightweight parts are needed, and in an effort to avoid the problems associated with conventional fasteners. The performance requirements of these adhesives are therefore being raised to meet the demands of these new applications for structural bonding.

In Figures 11 and 12, the SMA particles 602, 702, which may comprise NITINOL® alloy particles, are incorporated to improve the mechanical performance of the adhesive or to impart specifically desired properties to the adhesive depending on its intended application. The additional SMA particles 602, 702, and particularly NITINOL® alloy particles, to the adhesive base resin 604 or 704, provide the ability to improve mechanical properties of the adhesive base material, as well as significantly improve key properties such as impact or ballistic resistance, electrical and thermal conductivity, vibration, dampening and flame retardancy of the bonded joint of the parts 606 and 706. In particular, the hot/wet performance of the adhesive matrix or film 600, or paste 700, is significantly improved by utilizing SMA particles 602, 702 as a replacement for moisture sensitive elastomeric and thermoplastic additives traditionally used to toughen adhesives. Additionally, the SMA particles 602, 702 significantly enhance the high temperature performance of the adhesive matrix 600 or paste 700 due to its ability to more rapidly transfer heat through and away from the adhesive joint.

It will be appreciated that SMA particles 602, 702 could be utilized in the adhesive resin matrix or film 600, or paste 700, as the sole reinforcing additive or in combination with traditional additives and reinforcements utilized in film and paste adhesives depending on the requirements of the bonding application. In this embodiment, the SMA particles 602, 702 may be randomly and uniformly distributed in the base resin 604 and hence in the final resin matrix or film 600, of final adhesive paste 700.

SMA particles 602, 702, such as NITINOL® alloy particles, could be utilized in either their austenitic or martensitic phase conditions. Still further, the SMA particles 602, 702 could comprise a desired combination/percentage of austenitic phase and martensitic phase SMA particles, as needed to meet desired properties and performance. SMA particle content in the base resin matrix or film 604 could range from less that 1% to over 50% by volume relative to the base adhesive matrix 704 or film 604 depending on the desired properties of the adhesive bond and as long as the SMA additive does not negatively affect part producibility with regard to the bonding process. The SMA particles 602, 702 may or may not be subjected to a surface treatment prior to mixing with the base adhesive resin matrix 704 or film 604 to enhance the chemical bond of the metallic particles to the base adhesive matrix 704 or film 604.

SMA particle size may also range from nanometer in scale to millimeters, or even larger than millimeters, in scale, depending on the intended application of the part on which the adhesive joint is formed. The SMA particle shape can include various morphologies such as generally spherical, oval, platelet-like, multifaceted granules, or possibly cylindrical in the form of whiskers or short filaments. Alternatively, a combination of the above-described shaped SMA particles could incorporated to achieve desired joint bonding characteristics.

Referring now to Figure 13, there is shown a paint or coating 800 in accordance with another alternative preferred implementation of the present invention. The paint or coating 800 includes a base paint or compound 804 and a plurality of SMA particles 802 dispersed within the base paint or compound. The paint or coating 800 is used to form a protective outer surface of a part 806. In one preferred form the SMA particles 802 are comprised of NITINOL® alloy particles. The SMA particles 802 enhance the impact resistance, scratch resistance, wear and erosion resistance, electrical and thermal conductivity, vibration dampening and flame retardancy of the paint or coating 800 due to the unique properties of the SMA particles.

The SMA particles 802 can be used in the paint or coating compound 804 as the sole reinforcing additive or in combination with traditional additives and reinforcements utilized in paints and protective coatings, depending on the requirements of the application. Although the SMA particles 802 are randomly and uniformly dispersed within the base paint or compound 804, it will be appreciated that this could also be varied to suit the needs of a specific application.

With the paint or coating 800, the SMA particles 802, for example NITINOL® alloy particles, could be utilized in either their austenitic phase or their martensitic phase, or in a combination of these two phases, depending on the desired properties of the protective paint/coating and its application. SMA particle 802 content in the base paint or compound 804 can range from less than 1% to 50% or greater by volume relative to the base paint or compound as long as the SMA particles added do not negatively affect the painting or coating process. The SMA particles 802 may or may not be subjected to a surface treatment prior to mixing with the base paint or compound 804 to enhance the chemical bond of the metallic SMA particles to the base paint or compound.

For the paint or coating 800, SMA particle 802 size may also range from nanometers in scale to millimeters in scale, or even larger, depending on the needs of the specific application in which the paint or coating will be employed. Nanometer scale SMA particles would provide the additional benefit of being transparent as a coating due to the particle size being less than the wavelength of visible light, and would therefore be able to provide enhanced damage and micro-crack resistance to various components such as, for example, aircraft windows, canopies and other structures requiring light transmission. SMA particle shape could include various morphologies such as generally spherical, oval, platelet-like or as a multifaceted granule.

The size of the SMA particles used in the materials of the embodiments of Figures 7-13 may also vary considerably, but in most applications are likely to range up to, or to possibly exceed, 50 microns, and may be as low as .005 microns, or possibly smaller. If the SMA particles are cylindrical or whisker-like in shape, the length may be up to millimeters in length, or possibly larger.

The description of the invention is merely exemplary in nature and, thus, variations that do not depart from the gist of the invention are intended to be within the scope of the invention. Such variations are not to be regarded as a departure from the scope of the invention.

## Claims

1. A moldable resin for use in a molding process to form a molded part at least partially therefrom, the moldable resin comprising:
a base resin;
a plurality of shape memory alloy (SMA) particles interspersed in said base resin; and
wherein said SMA particles are suspended in said base resin and wherein said SMA particles comprise a mixture of SMA particles in their austenitic phase and SMA particles in their martensitic phase.

2. The resin according to claim 1, wherein said SMA particles comprise titanium-nickel alloy particles.

3. The resin of claims 1 or 2, wherein said SMA particles are less than 1 % of a total volume of said resin.

4. The resin of claims 1 or 2, wherein said SMA particles comprise between 1% and 50% by volume of said resin.

5. The resin of claims 1 or 2, wherein said SMA particles comprise at least 50% by volume of said resin.

6. The resin of any of claims 1-5, wherein said base resin comprises a thermoplastic resin.

7. The resin of any of claims 1-5, wherein said base resin comprises a thermosetting resin.

8. The resin of any of claims 1-7, wherein the molding process is an injection molding process or a compression molding process.

9. The resin of any of claims 1-8, wherein said SMA particles are formed in at least one of the group of shapes comprising: spherical, cylindrical and oval.

10. The resin of any of claims 1-9, wherein said SMA particles comprise granules intermixed within said base resin.

11. The resin of any of claims 1-10, wherein said SMA particles comprise a size of between 0.005 µm to 50 µm.

12. The resin of any of claims 1-10, wherein said SMA particles comprise a size of at least 50 µm.

13. The resin of any of claims 1-10, wherein said SMA particles comprise a size of no more than 0.005 µm.

## Patentansprüche

1. Formbares Harz zur Verwendung in einem Formprozess, um ein Formteil zumindest zum Teil daraus zu bilden, wobei das formbare Harz umfasst:
ein Basisharz; und
eine Mehrzahl von Formgedächtnislegierungsteilchen (SMA-Teilchen, Shape Memory Alloy), die in dem Basisharz eingestreut sind;
wobei die SMA-Teilchen in dem Basisharz suspendiert sind und wobei die SMA-Teilchen eine Mischung aus SMA-Teilchen in ihrer austenitischen Phase und SMA-Teilchen in ihrer martensitischen Phase umfassen.

2. Harz nach Anspruch 1, wobei die SMA-Partikel Titan-Nickel-Legierungsteilchen umfassen.

3. Harz nach Anspruch 1 oder 2, wobei die SMA-Teilchen weniger als 1 % des Gesamtvolumens des Harzes ausmachen.

4. Harz nach Anspruch 1 oder 2, wobei die SMA-Teilchen zwischen 1 und 50 Volumen-% des Harzes ausmachen.

5. Harz nach Anspruch 1 oder 2, wobei die SMA-Teilchen mindestens 50 Volumen-% des Harzes ausmachen.

6. Harz nach einem der Ansprüche 1 bis 5, wobei das Basisharz ein thermoplastisches Harz umfasst.

7. Harz nach einem der Ansprüche 1 bis 5, wobei das Basisharz ein wärmehärtendes Harz umfasst.

8. Harz nach einem der Ansprüche 1 bis 7, wobei es sich bei dem Formprozess um einen Spritzgießprozess oder einen Druckgussprozess handelt.

9. Harz nach einem der Ansprüche 1 bis 8, wobei die SMA-Partikel in mindestens einer der folgenden Formengruppen gebildet sind: sphärisch, zylindrisch und oval.

10. Harz nach einem der Ansprüche 1 bis 9, wobei die SMA-Teilchen in dem Basisharz vermischte Körnchen umfassen.

11. Harz nach einem der Ansprüche 1 bis 10, wobei die SMA-Teilchen eine Größe zwischen 0,005 µm bis 50 µm aufweisen.

12. Harz nach einem der Ansprüche 1 bis 10, wobei die SMA-Partikel eine Größe von mindestens 50 µm aufweisen.

13. Harz nach einem der Ansprüche 1 bis 10, wobei die SMA-Teilchen eine Größe von nicht mehr als 0,005 µm aufweisen.

## Revendications

1. Résine moulable destinée à entrer dans un processus de moulage visant à former une pièce moulée au moins partiellement à partir de celle-ci, la résine moulable comprenant:
une résine de base, et
une pluralité de particules d'alliage à mémoire de forme (AMF) dispersées dans ladite résine de base;
dans laquelle lesdites particules d'AMF sont en suspension dans ladite résine de base et dans laquelle lesdites particules d'AMF comprennent un mélange de particules d'AMF en phase austénitique et de particules d'AMF en phase martensitique.

2. Résine selon la revendication 1, dans laquelle lesdites particules d'AMF comprennent des particules d'alliage de titane-nickel.

3. Résine selon la revendication 1 ou 2, dans laquelle lesdites particules d'AMF représentent moins de 1 % du volume total de ladite résine.

4. Résine selon la revendication 1 ou 2, dans laquelle lesdites particules d'AMF représentent entre 1 % et 50 % en volume de ladite résine.

5. Résine selon la revendication 1 ou 2, dans laquelle lesdites particules d'AMF représentent au moins 50 % en volume de ladite résine.

6. Résine selon l'une quelconque des revendications 1 à 5, dans laquelle ladite résine de base comprend une résine thermoplastique.

7. Résine selon l'une quelconque des revendications 1 à 5, dans laquelle ladite résine de base comprend une résine thermodurcissable.

8. Résine selon l'une quelconque des revendications 1 à 7, dans laquelle le processus de moulage est un processus de moulage par injection ou un processus de moulage par compression.

9. Résine selon l'une quelconque des revendications 1 à 8, dans laquelle lesdites particules d'AMF sont formées pour avoir au moins une des formes suivantes: sphérique, cylindrique ou ovale.

10. Résine selon l'une quelconque des revendications 1 à 9, dans laquelle lesdites particules d'AMF comprennent des grains mélangés dans ladite résine de base.

11. Résine selon l'une quelconque des revendications 1 à 10, dans laquelle lesdites particules d'AMF présentent une taille comprise entre 0,005 µm et 50 µm.

12. Résine selon l'une quelconque des revendications 1 à 10, dans laquelle lesdites particules d'AMF présentent une taille d'au moins 50 µm.

13. Résine selon l'une quelconque des revendications 1 à 10, dans laquelle lesdites particules d'AMF présentent une taille ne dépassant pas 0,005 µm.
